# EUROPEAN PATENT APPLICATION

(11) **EP 2 278 364 A1**
(43) Date of publication of application: **26.01.2011**
(21) Application number: 10166794.7
(22) Date of filing: 22.06.2010
(51) Int. Cl.: G02B 6/00

(54) **A luminaire**

(30) Priority: 22.07.2009 GB 0912676
(71) Applicant: LPA Excil Electronics, Nomanton Wakefield York WF6 1QT (GB)
(72) Inventor: Hesketh, John, Wakefield, Yorkshire WF6 1QT (GB); Ramsden, Martin, Wakefield, Yorkshire WF6 1QT (GB)
(74) Representative: Smithson, Robert Alan

(57) **Abstract**

A luminaire (102) comprising a housing portion (106) and an illumination portion (104), wherein the illumination portion (104) comprises an optical medium (124), the luminaire (102) further comprising one or more LEDs (114) arranged to illuminate at least a portion of an edge of the optical medium (124).

## Description

The present invention relates to a luminaire, particularly, although not exclusively to an edge lit luminaire for use on public transport.

Luminaires for lighting various areas are well known in the art, Traditionally, a luminaire comprises a housing and a light source. Prior art luminaires traditionally employ tungsten or fluorescent light sources which are poor in terms of their energy efficiency.

Further, prior art luminaires, particularly for use in the field of public transport, have problems with their size, being usually large and heavy, their longevity, requiring regular maintenance and the restriction in terms of their size and shape relative to the areas in which they are required. Further, prior art luminaires are also poor in luminous efficacy.

It is an object of aspects of the present invention to provide a luminaire which is advantageous over prior art luminaires.

According to a first aspect of the present invention there is provided a luminaire comprising a housing portion and an illumination potion, wherein the illumination portion comprises an optical medium, the luminaire further comprising one or more LEDs arranged to illuminate at least a portion of an edge of the optical medium.

Preferably, the illumination portion comprises two or more layers. Preferably, the illumination portion is laminar. Preferably, the optical medium is a layer of the illumination portion.

Preferably, the illumination portion comprises a structural layer, which may be formed from a structural material, such as metal, for example aluminium.

Preferably, the illumination portion comprises a reflector layer, preferably being operable to reflect light directed thereonto.

Preferably, the illumination portion comprises a lens layer, which is preferably a microcellular lens layer.

Preferably, the illumination portion comprises a protective layer, which may be an outer layer, preferably being formed from a generally transparent material. Preferably, the protective layer is formed from a polycarbonate material or a glass material.

Preferably, the optical medium comprises a diffuser layer.

Preferably, the optical medium comprises a dot pattern on at least one surface thereof, preferably on a surface which is generally parallel with the direction of light emitted by the LEDs, in use. The dot pattern may be arranged to have a non uniform dot density. The density of dots in the dot pattern may increase as a function of distance away from the edge of the surface proximal to the LEDs, preferably the dot density increases linearly.

The LEDs may be accommodated in a portion of the housing.

Preferably, the luminaire further comprises drive electronics, which may be accommodated in a portion of the housing, The drive electronics may be operable to increase the electronic reliability level of the luminaire.

Preferably, the luminaire comprises a plurality of LEDs. For example, the luminaire may comprise 2 to 50 LEDs, preferably 10 to 40. in one embodiment, the luminaire comprises 32 LEDs.

Preferably, the plurality of LED are arranged in series. Preferably, at least one of the the plurality of LEDs arranged in series comprises an LED shunt, operable to allow the LED to be electrically bypassed, should the LED fail, Preferably, each of the plurality of LEDs arranged in series comprises an LED shunt.

Preferably, the luminaire of the present invention is arranged for use in public transport, such as trains and buses.

All of the features disclosed herein may be combined with any of the above aspects and in any combination.

For a better understanding of the invention, and to show how embodiments of the same may be carried into effect, reference will now be made, by way of example, to the accompanying diagrammatic drawings in which:
Figure 1 shows a perspective view of a luminaire according to the invention;
Figure 2 shows an a perspective view of the luminaire having an outer cover removed therefrom;
Figure 3 shows an exploded schematic side view of the luminaire;
Figure 4 shows a schematic end view of a portion of the luminaire;
Figure 5 shows detail of optical medium of the luminaire; and
Figure 5a shows an enlarged portion of figure 5.

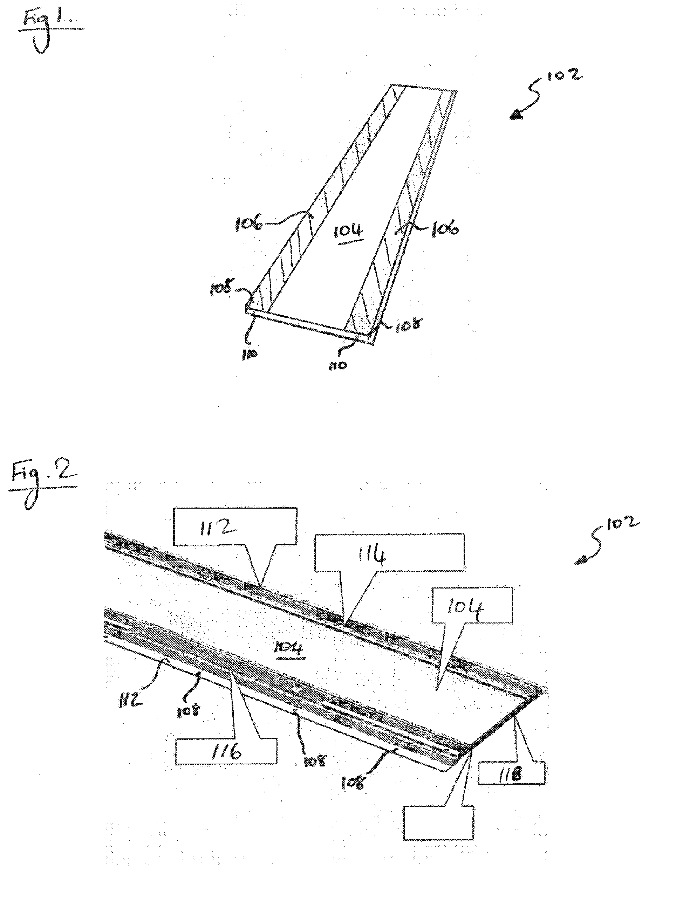

Turning first to figure 1 there is shown a luminaire 102 of the present invention comprising an elongate rectilinear illumination portion 104, flanked along the two longer edges by edge sections 106. Apertures 108 are shown along the long edges to allow the luminaire 102 to be secured to a surface, and apertures 110 are shown along the short edges to allow multiple luminaires to be secured together, Items 110 are end plates to provide structural integrity binding together items 106.

Referring now to figure 2, there is shown the luminaire 102 having an outer cover removed therefrom. A pair of aluminium elongate extrusions 112, along either side of the illumination portion 104 are shown, which form the edge sections 106. Arranged along one long edge of the illumination portion 104, within a profile of the extrusions 112 are a plurality of LEDs 114. The LEDs are aligned such that, when illuminated, they transmit light into the edge of the illumination portion 104. At an edge of the illumination portion opposite to the LEDs 114, integrated into the extrusion 112 profile are drive electronics 116, operable to control the illumination of the LEDs 114 as will be described hereunder. Along a short edge of the illumination portion 104 is a link PCB 118, operable to complete the electrical circuit between the LEDs 114 and the drive electronics 116.

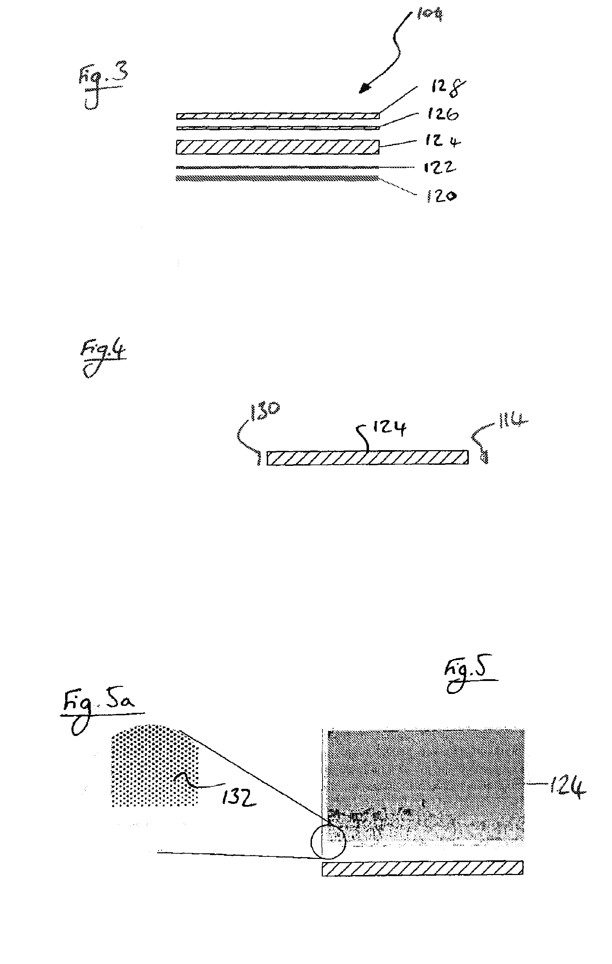

Referring now to figure 3, there is shown an exploded view of an illumination portion 104 of the luminaire 102, The illumination portion 104 comprises a five layered structure, as follows. Working from bottom to top of figure 3 (which corresponds to working from innermost layer of the luminaire to the outermost layer) there is shown an aluminium substrate layer 120, on top of which is a reflector layer 122, on top of which is an optical medium layer 124, on top of which is a microcellular lens layer 126, on top of which is a protective outer layer 128. The laminate structure will be described in detail hereunder.

Referring to figure 4 there is shown the optical medium layer 124 having the LEDs 114 arranged along one side, with a reflective portion 130 arranged along an opposite edge of the optical medium layer to the LEDs.

Referring now to figure 5 and 5a, there is shown detail of the surface of the optical medium layer 124. As is shown clearly in figure 5a, the surface has a dot pattern 132 thereon. The density of dots increases with distance away from the edge where the LEDs 114 are aligned.

The example embodiment of the luminaire 102 and the operation thereof will now be described in more detail.

The product may be driven from either an AC or a DC power source. The purpose of the drive electronics 116 is to convert the incoming AC or DC power source into a regulated constant current suitable for driving of the LEDs 114, The design of the drive electronics 116 is such that it realises a reliability level comparable to or greater than that of the LEDs 114 thus ensuring total product reliability,

The incoming power supply (either AC or DC, not shown) is applied to power converter circuitry. Typically, two such converters are employed for a 1200mm length product.

The converters produce at their outputs, a constant current of typically, 320 to 350mA suitable for driving the LED emitter devices.

This LED current is held constant over a wide range of incoming supply voltage resulting in constant light output irrespective of incoming supply variations. In a typical embodiment, 32 LEDs are utilised for a 1200mm length of the product. Typical LEDs are the Luxeon "Rebel" device, these are high brightness power devices.

Typically, each power converter drives 16 LEDs. The LEDs 114 are current driven, so they are connected in series to the output of the LED power supply. Normally, such a series connection would result in failure of the whole chain should a single LED fail open circuit, However, to prevent this shortfall, LED shunts are fitted across each LED. Therefore, should a LED fail open circuit, the voltage across that LED will rise, the shunt device detects this rise in voltage and switches to short circuit mode, thus provided a bypass current path. A typical shunt device is "On-Semiconductor" NUD7400.

The LEDs 114 are arranged to project light into a side edge of the optical medium layer 124 as illustrated in figure 4. Further, along an edge of the optical medium layer 124 opposite to the LEDs 114 is a reflector plate, causing light transmitted through the layer 124 to be reflected back into the optical medium layer 124.

A means of dimming the LEDs 114 may be included. Preferably, the dimming is operable to be effected by pulse width modulation. Pulse width mediation is preferable because it retains the true colour output of the LEDs 114.

In more detail, the layers of figure 3 are as follows:
Layer 1: Metallic stability substrate layer 120, usually of aluminium,
Layer 2: Reflector layer 122, typically about 1mm thickness, formed from, for example, MC-PET, Furukawa Electric, Tokyo, Japan
Layer 3: Optical medium layer 124, equipped on one side only with a dispersion pattern (dot matrix pattern), typically acrylic within the thickness range 6 to 8mm.
Layer 4: Micro cellular lens layer 126, typical thickness 0.25mm For example, L7535S1, Luminit
Layer 5: Protective outer layer 128.

The LEDs 114 are situated on the edge on the optical medium along the length of the product. Note that a further reflective surface 132 is included along the edge of the optical layer structure, that is, at the opposite side to the LEDs 114, as shown in figure 4.

The optical medium layer 124, is printed with a dispersion or dot pattern 132 as illustrated in figure 5a. Alternatively, the pattern 132 may be applied to the surface using other techniques, such as laser etching, for example. The pattern is on one side only, that is, the rear of the panel, closest to the reflector layer 122.

The LEDs 114 are high brightness power types of colour temperature to suite the application, The LEDs 114 have a wide light emission angle as is typical of such devices, e.g. 110 to 170 degrees full angle.

The LEDs 114 are arranged to project light directly into the optical medium layer 124. In the absence of a dispersion pattern 132, light entering the optical medium layer 124 from the LEDs at an angle greater than the critical angle of the material would be reflected internally within the medium by the process of total internal reflection (TIR)., thus little external visible light would be apparent.

The presence of the dispersion or dot pattern 132 interferes with the process of TIR by the introduction of variable critical angles. The net effect is light breakout from the medium. This light breakout is deliberate and is the principle mechanism for attaining light emission from the product.

In its simplest form, the dispersion pattern 132 is of uniform duty and density across the luminaire width, however, this would result in a more intense luminous flux emission closer to the LED sources.

A refinement of this is to have a low density dispersion pattern close to the LED sources which increases linearly in density across the width of the optical medium. The net effect is uniform luminous flux and luminance across the width.

The reflector layer 122 is located immediately behind the dot pattern 132 and serves to prevent light leakage from the dot pattern side of the optical medium layer 124.

A micro cellar film layer 126 is placed in front of the optical medium and serves to both diffuse and control the emission angle of luminous flux from the luminaire 102. This typically contains, at micro cellular level, elliptical lenses of emission angle 75 deg x 35 deg.

The protective layer 128 is typically polycarbonate or laminated safety glass. If polycarbonate is used, this serves only to protect the layer construction, however use of laminated safety glass performs this function with the added benefit of additional fire protection.

The LEDs 114 are typically of white light colour emission but the principle is equally applicable to all colours.

The optical technology employed results in a uniform, homogeneous light source being emitted from the luminaire 102. The optical layer structure is also capable of being formed into a curve.

A luminaire formed in accordance with the present invention has the benefit that a light source having extremely high optical efficiency resulting in up to 40% power saving (with comparable luminous flux) over that of the equivalent length fluorescent fitting is achieved. The optical layer arrangement has an efficiency of around 90% compared to 50% light transmission for a typical fluorescent luminaire polycarbonate diffuser.

The high optical efficiency is due to the optical medium layer being totally clear without the need for diffusion loading.

Furthermore, a luminaire according to the present invention has an extremely low profile, for example, 18mm in thickness, has ultra long service life (11.5 to 17 years) without lamp changes, has huge reductions in lamp cost replacement and maintenance costs, is suited to high reliability arduous environnments due to the use of robust LED solid state technology and appropriate luminaire construction techniques. Also, a luminaire according to the present invention offers weight savings over conventional technology.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embediment(s), The invention extends to any novel one, or any novel combination, of the features disclosed in this specification (including any accompanying claims, abstract and drawings), or to any novel one, or any novel combination, of the steps of any method or process so disclosed.

## Claims

1. A luminaire comprising a housing portion and an illumination portion, wherein the illumination portion comprises an optical medium, the luminaire further comprising one or more LEDs arranged to illuminate at least a portion of an edge of the optical medium.

2. A luminaire according to claim 1, wherein the illumination portion comprises two or more layers.

3. A luminaire according to claims 1 or 2, wherein the illumination portion is laminar,

4. A luminaire according to claims 2 or 3, wherein the optical medium is a layer of the illumination portion.

5. A luminaire according to any preceding claim, wherein the illumination portion comprises a lens layer.

6. A luminaire according to any preceding claim, wherein the illumination portion comprises a reflector layer.

7. A luminaire according to any preceding claim, wherein the illumination portion comprises a lens layer.

8. A luminare according to any preceding claim, wherein the illumination portion comprises a protective layer.

9. A luminare according to any preceding claim, wherein the optical medium comprises a diffuser layer.

10. A luminare according to any preceding claim, wherein the optical medium comprises a dot pattern on at least one surface thereof.

11. A luminare according to claim 10, wherein the dot pattern is arranged to have a non uniform dot density.

12. A luminare according to any preceding claim which comprises a plurality of LEDs.

13. A luminare according to any preceding claim which is arranged for use in public transport, such as trains and buses.
